# EUROPEAN PATENT SPECIFICATION

(11) **EP 3 690 657 B1**
(45) Date of publication and mention of the grant of the patent: **21.06.2023**
(21) Application number: 18869693.4
(22) Date of filing: 10.05.2018
(51) Int. Cl.: G06F 11/20, G06F 11/14, G06F 11/16, B61L 19/06, B61L 27/30

(54) **COMPUTER-BASED INTERLOCKING SYSTEM AND REDUNDANCY SWITCHING METHOD THEREOF**
COMPUTERBASIERTES VERRIEGELUNGSSYSTEM UND REDUNDANZSCHALTUNGSVERFAHREN DAFÜR
SYSTÈME D'IMBRICATION BASÉ SUR DES ORDINATEURS ET PROCÉDÉ DE COMMUTATION À REDONDANCE ASSOCIÉ

(30) Priority: 24.10.2017 CN 201711001027
(43) Date of publication of application: 05.08.2020
(73) Proprietor: CRSC Research & Design Institute Group Co., Ltd., Beijing 100070 (CN)
(72) Inventor: LIU, Xiaodong, Beijing 100070 (CN); LIU, Zhen, Beijing 100070 (CN); AO, Qi, Beijing 100070 (CN); ZHANG, Lifeng, Beijing 100070 (CN); YE, Feng, Beijing 100070 (CN); CHEN, Daiying, Beijing 100070 (CN); ZOU, Weidong, Beijing 100070 (CN); LV, Yuanyuan, Beijing 100070 (CN)
(74) Representative: Huang, Liwei
(86) International application number: PCT/CN2018/086255
(87) International publication number: WO 2019/080477

(56) References cited:
- EP-A2- 0 478 294
- CN-A- 101 876 928
- CN-A- 104 268 037
- CN-A- 104 268 037
- CN-A- 106 095 626
- CN-A- 107 992 382
- ANDREA HÖLLER ET AL: "Evaluation of diverse compiling for software-fault detection", 20150309; 1077952576 - 1077952576, 9 March 2015 (2015-03-09), pages 531-536, XP058067531, DOI: 10.7873/DATE.2015.0118 ISBN: 978-3-9815370-4-8

## Description

### TECHNICAL FIELD

The present invention relates to the field of rail transit, and in particular, to a computer-based interlocking system.

### BACKGROUND

In the existing development of rail transit interlocking platforms, the interlocking architecture generally adopts a double 2-vote-2 platform. The platform consists of system A and system B with the same 2-vote-2 structure. The CPU board of each system is provided with two central processing units (CPUs) with exactly the same hardware, and runs a set of common software internally. Normally, one system is logically master, and the other system is a logical salve. The two CPUs of each system adopt a clock-level synchronization, and when the master system fails, it automatically switches to the standby system. However, due to adoption of the clock-level synchronization, it is directly subject to the main processing frequency of the CPU, that is, CPU's clock frequency cannot be too fast, otherwise the data synchronization in a period will be affected due to the failure of completing the operation within a specified time.

At present, with the continuous improvement of computer performance, the computer with clock-level synchronization has lagged far behind the existing general-purpose computer. Furthermore, the dual CPU clock synchronization method has a disadvantage of failing to implement two different sets of algorithms in two CPUs, and cannot eliminate the common-mode failure of the software.

Therefore, currently many researches (such as CN201410459448.X) propose to adopt a hot-redundant double 2-vote-2 hot-standby switching mechanism, in which both software and hardware are heterogeneous, and two CPUs with heterogeneous hardware and task-level synchronization respectively run two different sets of software to eliminate common-mode failures of the software. However, this redundant method is difficult to develop, and requirements for debugging and maintenance are relatively high, thereby reducing production efficiency greatly.

Some other prior art documents for a redundant system can be seen from CN 104268037 A, EP0478294 A2, and ANDREA HOLLER ET AL: "Evaluation of diverse compiling for software-fault detection" (March 2015(2015-03-09), pages 531-536, XP058067531, DOI: 10.7873/DATE.2015.0118, ISBN:978-3-9815370-4-8).

### SUMMARY

In view of this, the present invention provides a computer-based interlocking system. Heterogeneous software/hardware and program running starting times with a fixed difference are adopted to reduce the probability of occurrence of common-mode failures; thus, the development difficulty is lowered, the production efficiency is improved, and requirements for debugging and maintenance are lowered while reducing common-mode failures.

The invention is set out in the appended set of claims.

Not being part of the present invention, we further provide a redundancy switching method based on the computer-based interlocking structure, including a first system and a second system for performing master-slave redundancy switching, wherein the method includes the following steps:
starting the first system (the second system) which enters a standby state, and determining whether to get it to enter a logically master mode or a logically slave mode based on a current working mode of the second system (the first system), dual-system communication state and dual-system clock synchronization state;
receiving the synchronization information and synchronizing mutually confirming the information in each period, if the first system or the second system is found to have a serious unavailability failure during a mutual confirmation process, shutting down the system in which the failure occurs, and if the system is a master system, performing master-slave switching;
if the master system is less healthy than a slave system, performing master-slave switching on the two systems; and
outputting, by the first system and the second system the same data after performing data comparison and mutually confirming that data are consistent.

Further, when the slave system is healthier than the master system, switching the slave system to the master system where the original master system enters standby state, and if the original master system is synchronized with the current master system and fault-free after entering the standby state, switching the original master system to the slave system.

Further, controlling the slave system to enter standby state when meeting one of the following conditions: not synchronized with the master system; the slave system is less healthy than the master system; and both the master system and the slave system fail and have the same fault degree.

Further, if the master system or the slave system loses communication with the other system or a period starts being interrupted after entering the standby state, switching it to the master system; and if the system has a serious unavailability failure, shutting down the system.

Further, controlling the master system or the slave system to enter standby state again when it is restarted form shutdown state with software running.

The beneficial effects of the present invention are:
(1) Through heterogeneous software/hardware of the interlocking structure, the probability of occurrence of common-mode failures is reduced, and system security is improved;
(2) By adopting a scheme of a heterogeneous compiler with the same hardware for the interlocking subsystem, the same source code has running starting times with a fixed difference when run on the same hardware, and thus the development difficulty is lowered, the production efficiency is improved, and requirements for debugging and maintenance are lowered while reducing common-mode failures;
(3) The IO subsystem directly connected to a field device is designed to be heterogeneous in software/hardware, which ensures safety of a driving and collection result, while an upper-layer interlocking subsystem will focus more on the work of safe logic operation and safe communication, and system safety implementation has been allocated more reasonably, which ensures reasonable and efficient utilization of system resources.

### BRIEF DESCRIPTION OF THE DRAWINGS

The above and other objects, features and advantages of the present invention will become more apparent from the description of the embodiments of the present invention below with reference to the accompanying drawings. In figures:
FIG. 1 is a structural diagram of a computer-based interlocking system according to the present invention;
FIG. 2 is a software architectural diagram of a computer-based interlocking system according to the present invention;
FIG. 3 is a structural diagram of an interlocking subsystem according to the present invention; and
FIG. 4 is a diagram of a master-slave system switching state.

### DETAILED DESCRIPTION

The present invention is described below based on the embodiments, but the present invention is not only limited to these embodiments.

The computer-based interlocking system provided by the present invention is a signal system for realizing station interlocking by using a computer as a main technical means. The computer-based interlocking system constitutes an interlocking connection of both mutual relation and mutual restriction for all relatively independent signal devices in stations and sections, such as a signal machine, a track circuit, a turnout, and the like that are included in interlocking and performs centralized control, and the computer-based interlocking system is a control system that for ensuring driving safety.

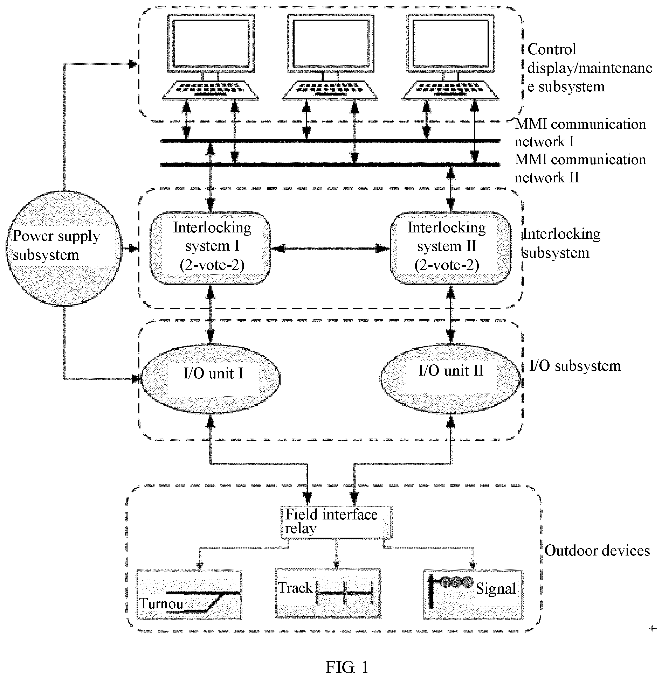

As shown in FIG. 1, the computer-based interlocking system provided by the present invention includes a power supply subsystem, an interlocking subsystem, IO subsystem (input and output subsystem), and a control display and maintenance subsystem. Among them, the power supply subsystem provides required power supply for devices of all subsystems, so that the whole interlocking system can work safely and reliably. The interlocking subsystem consists of an interlocking logic part, which is the core of the interlocking system. The interlocking subsystem receives operation information from a human-machine dialog layer of the control display and maintenance subsystem and device state information of signals, turnouts, tracks, and the like of the IO subsystem and performs safety logic operation according to the above information and generates corresponding control input, and actual control is performed by the IO subsystem on signal devices. The IO subsystem is composed of collection drive devices of field signal devices, and the IO subsystem transforms in a safe manner a result derived from an interlocking operation into a voltage (or a current) that may enable the field signal devices to operate directly or through interface circuits of relays of the field signal devices. By using a visual human-machine interface of the control display and maintenance subsystem, operations are provided and maintenance staff can input control commands to the system and monitor driving operations and devices' working state information.

The computer-based interlocking system provided by the present invention adopts a double 2-vote-2 structure designed based on a fault-safety technology. A 2-vote-2 comparison structure is widely used in design, and heterogeneous software/hardware is adopted in 2-vote-2 combination fault-safety design, and program running starting times with a fixed difference are adopted to reduce the probability of occurrence of common-mode failures, and thus system security is improved.

As shown in FIG. 1, as one of specific embodiments of the present invention, the interlocking subsystem in the computer-based interlocking system provided by the invention adopts 2-vote-2 combination fault-safety design. Hardware of master-slave dual systems (interlocking system I and interlocking system II in the figure) are consistent, but programs run by dual CPUs of each system are respectively generated by different compilers.

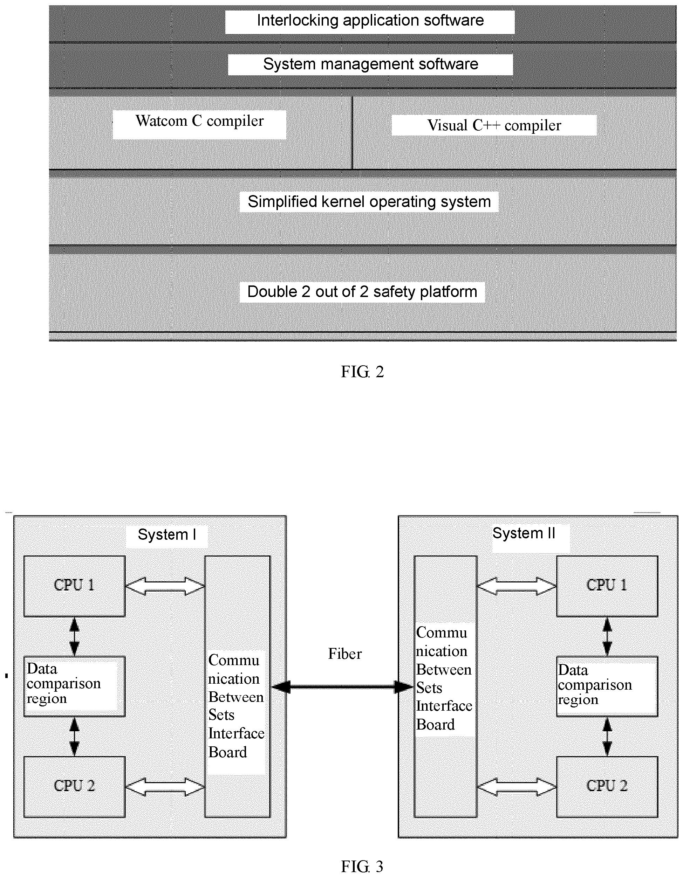

Further, system management software of the interlocking subsystem logic part and interlocking application software are developed in C language, and different compilers are used for dual CPUs in each system. As shown in FIG. 2 and 3, a CPU 1 adopts Visual C++ compiler (that is, VC compiler), and a CPU 2 adopts Watcom C compiler (that is, WC compiler). The dual CPUs adopt different compilers to separately compile and link the same code, and finally generate different executable files.

WC and VC, as the most important C/C++ development tools in the 1990s, have achieved great success and widespread use on the market, and are the most mature C/C++ compilers that conform to an ANSI_C standard. These 2 compilers are developed by 2 different companies, and executable files generated by 2 compilers are different in both allocation of data and code memory and code execution efficiency. After the same software is compiled using WC and VC, it is found through analyzing compiled files that difference in address allocation of a code segment and a data segment of the compiled files is obvious, which can prevent common-mode failures caused by memory.

In addition to the difference in address allocation, there are certain differences in the time of executing the same control statement in codes. After testing, the execution speed of a program compiled using WC is 5 ms faster than that of a program compiled using VC. There is a fixed time difference in executing one function by the dual CPUs, which can prevent common-mode failures caused by processors.

In addition to being able to prevent the common-mode failures of the memory and the processor, because executable programs generated by the VC compiler and the WC compiler are different, a risk of failing of ROM decoding itself is prevented.

By adopting two heterogeneous compilers, WC and VC, a risk of common cause failures caused by the compiler, the memory, the ROM, the processor, and the like can be effectively prevented, and system security is improved.

By adopting a heterogeneous compiler scheme for the interlocking subsystem, the same source code has running starting times with a fixed difference when run on the same hardware, and thus the development difficulty is lowered, the production efficiency is improved, and requirements for debugging and maintenance are lowered while reducing common-mode failures.

As shown in FIG. 3, an interlocking subsystem in a computer-based interlocking system provided by the present invention always keeps synchronized during system operation; Two CPUs (CPU 1 and CPU 2) in interlocking system I (or interlocking system II) respectively perform independent operations, synchronize data using Communication Between Sets Interface Board and exchange the data, and generate valid external drive commands when voting results are consistent.

As one of specific embodiments of the present invention, the IO subsystem in the computer-based interlocking system provided by the invention also adopts 2-vote-2 combination fault-safety design and realizes hardware/software heterogeneity on the IO subsystem. The IO subsystem directly connected to field devices is designed to have an IO system I and an IO system II that are the same and that are respectively connected to the interlocking system I and the interlocking system II, and the IO system I and the IO system II are designed to be heterogeneous in software/hardware, which ensures safety of a driving and collection result, while the upper-layer interlocking subsystem will focus more on the work of safe logic operation and safe communication, and allocation of system safety implementation is more reasonably, which ensures reasonable and efficient utilization of system resources.

Further, the IO subsystem is heterogeneous in both software and hardware. Wherein an input collection unit adopts a dynamic collection manner to collect a static DC voltage through dynamic code sending, wherein two independent CPU units within an input collection cage separately perform collection, and then collection results are compared by the interlocking subsystem; if the results are consistent through comparison, collected data are considered to be valid, otherwise, the collected data are invalid and constitutes double 2-vote-2 fault-safety collection; Wherein an output unit adopts double-break control manner , wherein two drivers comprising a dynamic driver and a static driver output in series, wherein the static output and the dynamic output are respectively controlled by two independent CPU units in an output cage, and when either of two-way outputs is invalid, a total output is invalid and thereby a 2-vote-2 fault-safety output with different hardware is constituted.

Generally, the driving and collection of railway systems both adopt dual channels. Some driving and collection points with low safety requirements may adopt a single channel, that is, a separate one-way driving or collection channel. To improve safety of a single channel, as one of the specific embodiments of the present invention, a function execution unit for the single channel according to the present invention adopts an inherent fault-safety device, where a fast error detection mechanism is designed to take measures to trigger a safety response when a fault is detected, thereby realizing a fault-safety system with a 2-vote-2 structure in the whole process from input to output.

Further, the inherent fault-safety device is a special component, such as a transformer and a relay, and will not lead to subsequent error output of a circuit after the component fails, thus guiding system to safe side.

As one of the specific embodiments of the present invention, the function execution unit of the computer-based interlocking system according to the present invention directly controls a device of a station mechanical indoor gravity relay, and then indirectly controls outdoor signal devices through a combination of different relay circuits.

Both the interlocking subsystem and the IO subsystem in the computer-based interlocking system provided by the present invention perform corresponding fault processing according to an error level, no matter which subsystem detects an error. If the interlocking subsystem detects its own fault, the interlocking subsystem carries out processing such as getting down or downgrading as standby according to the error level. If the IO subsystem detects an error, the IO subsystem first uploads fault information to the interlocking subsystem, and then performs processing such as downtime according to the fault level. After acquiring the fault information from the IO subsystem, the interlocking subsystem identifies and processes the fault and guides it to the safe side.

Subsystems in the computer-based interlocking system provided by the present invention are independent of each other, and safety-related subsystems - the interlocking subsystem and the IO subsystem both adopt fault-safety design, so that fault-safety functions can be realized independently, and high safety and high availability of the system are ensured. In addition, both the interlocking subsystem and the IO subsystem can work independently to ensure high availability of the system.

Based on the foregoing computer-based interlocking system, but not being part of the present invention, we further provide a redundancy switching method based on the foregoing computer-based interlocking system. The present embodiments are described by using the interlocking subsystem as an example. A related technology can be easily extended to other interlocking structures.

The redundancy switching method includes the following steps:
starting the interlocking system I (interlocking system II) which enters a standby state, and determining to enter a logically master mode or a logically slave mode based on current working mode of the interlocking system II (interlocking system I), dual-system communication state and dual-system clock synchronization state.
receiving input synchronization information in each period and synchronizing information of mutually confirmation, if the interlocking system I or the interlocking system II is found to have a serious unavailability failure during a mutual confirmation process, the system in which the failure occurs is to shut down, and if the system is a master system, performing master-slave switching;
if the master system is less healthy than the slave system, performing master-slave switching on the two systems; and
the interlocking system I and the interlocking system II output the same data after performing data comparison and mutually confirming that data are consistent.

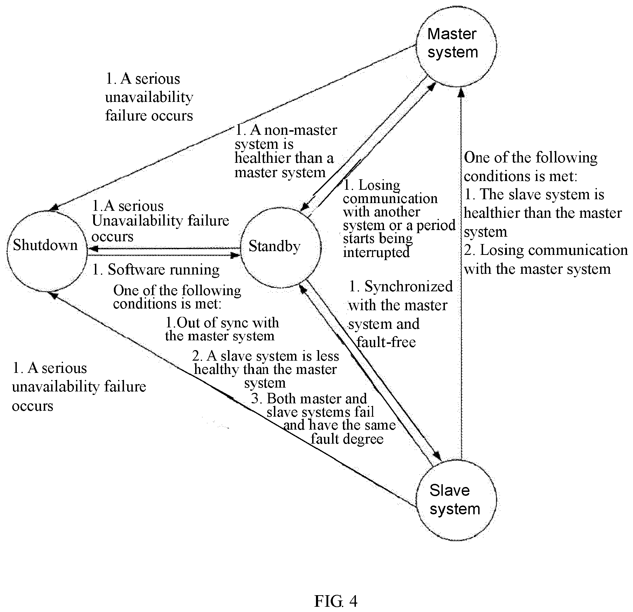

As shown in FIG. 4, the master system or the slave system will enter a shutdown state in case of a serious unavailability failure. If the serious unavailability failure occurs to the master system, the slave system loses communication with the master system and is automatically switched to the master system. In addition, if the slave system is healthier than the master system and has a fault lower level than that of the master system, the slave system is switched to the master system. In this case, the original master system enters standby state, and if the original master system is synchronized with the current master system and are fault-free after entering the standby state, switch the original master system to the slave system.

The slave system enters standby state when meeting one of the following conditions: not synchronized with the master system; the slave system is less healthy than the master system; and both the master system and the slave system fail and have the same fault degree.

In addition, if the master system or the slave system loses communication with the other system or a period starts being interrupted after entering the standby state, switch the slave system to the master system; and if a system has a serious unavailability failure, shutdown it.

If restarted from shutdown state with software running, the master system or the slave system enters standby state again.

In conclusion, the computer-based interlocking system and the master-slave switching method support regional centralized interlocking control. By providing a set of interlocking hosts in a central station, centralized control of a plurality of stations can be realized. An optical fiber transmission distance between adjacent stations (without a network relay) can reach up to 40 km. Connection using optical cables are adopted among internal devices, to ensure high reliability of information channels inside the system. In addition, there are the following features:
Self-diagnosis function is perfect and fault alarm is accurately located; a graphic reproduction and printing function and a remote diagnosis function are provided. The structure is simple and reasonable, and safety and reliability meet the international standard; a common standard network interface is provided. Safe or non-safe communication with an external system, for example, safe communication with a wireless block center is implemented as required; and perfect supporting off-line data generation, system configuration software and testing tools are provided.

The description described above is only a preferred embodiment of the present invention, and is not intended to limit the present invention. In addition, various changes and modifications may be made in the present invention.

## Claims

1. A computer-based interlocking system, comprising: an interlocking subsystem, the interlocking subsystem including an interlocking system I and an interlocking system II that are the same and are interconnected to each other, wherein
each of the interlocking system I and the interlocking system II comprises two CPUs having the same hardware and adopting task-level synchronization, and the two CPUs respectively run executable files generated by different compilers through compiling the same program codes;
the system further comprising: an IO subsystem, and a control display and maintenance subsystem;
the interlocking subsystem receives operation information from a human-machine dialog layer of the control display and maintenance subsystem, and receives device status information collected by the IO subsystem, to perform a safety logic operation, and to perform actual control on a device using the IO subsystem;
wherein the IO subsystem includes an IO system I and an IO system II that are the same, and the IO system I and the IO system II are respectively connected to the interlocking system I and the interlocking system II; and
each of the IO system I and the IO system II comprises two CPUs having the same or heterogeneous hardware, the two CPUs respectively run two sets of different software;
wherein each of the IO system I and the IO system II comprises an input collection unit, the input collection unit collects a static DC voltage through a dynamic code-sending method where two independent CPU units within an input collection cage separately perform collection, and then send collection results to the interlocking subsystem to be compared by the interlocking subsystem; if the results are consistent through comparison, collected data are considered to be valid, otherwise, the collected data are invalid; thereby achieving a 2-vote-2 fault-safety collection.

2. The computer-based interlocking structure according to claim 1, wherein the two CPUs respectively run the executable files generated by Visual C++ compiler and Watcom C compiler through compiling the same program codes.

3. The computer-based interlocking system according to any one of claims 1 to 2, wherein: each of the IO system I and the IO system II further comprises an output unit, which adopts a double-break control manner, wherein two drivers, comprising a dynamic driver and a static driver, output in series, wherein the static output and the dynamic output are respectively controlled by two independent CPU units in an output cage, and when either of the two outputs is invalid, a total output is invalid and a 2-vote-2 fault-safety output with different hardware is constituted thereby.

4. The computer-based interlocking system according to any one of claims 1 to 3, wherein: a function execution unit of the IO subsystem directly controls a station mechanical indoor gravity relay, and controls outdoor signal devices through a combination of different relay circuits.

## Patentansprüche

1. Computerbasiertes Stellwerksystem, umfassend: ein Stellwerk-Subsystem, wobei das Stellwerk-Subsystem ein Stellwerksystem I und ein Stellwerksystem II enthält, die gleich sind und miteinander verbunden sind, wobei
jedes von dem Stellwerksystem I und dem Stellwerksystem II zwei CPUs umfasst, die dieselbe Hardware aufweisen und eine Synchronisation auf Aufgabenebene annehmen, und die zwei CPUs jeweils ausführbare Dateien ausführen, die von unterschiedlichen Compilern durch Kompilieren derselben Programmcodes generiert wurden;
wobei das System ferner umfasst: ein IO-Subsystem, und
ein Steueranzeige- und Wartungssubsystem;
wobei das
Stellwerk-Subsystem Betriebsinformationen von
einer Mensch-Maschine-Dialogschicht des
Steueranzeige- und Wartungssubsystem empfängt und vom IO-Subsystem gesammelte Gerätestatusinformationen empfängt, um eine Sicherheitslogikoperation durchzuführen und um eine tatsächliche Steuerung an einem Gerät unter Verwendung des IO-Subsystems durchzuführen;
wobei das IO-Subsystem ein IO-System I und ein IO-System II enthält, die gleich sind, und das IO-System I und das IO-System II jeweils mit dem Stellwerksystem I und dem Stellwerksystem II verbunden sind; und
das IO-System I und das IO-System II jeweils zwei CPUs mit gleicher oder heterogener Hardware umfassen, wobei die beiden CPUs jeweils zwei Sätze unterschiedlicher Software ausführen;
wobei das IO-System I und das IO-System II jeweils eine Eingangssammeleinheit umfassen, wobei die Eingangssammeleinheit eine statische Gleichspannung durch ein dynamisches Code-Sendeverfahren sammelt, wobei zwei unabhängige CPU-Einheiten innerhalb eines Eingangssammelkäfigs getrennt eine Sammlung durchführen, und dann Sammlungsergebnisse an das Stellwerk-Subsystem senden, um von dem Stellwerk-Subsystem verglichen zu werden; wobei, wenn die Ergebnisse durch Vergleich übereinstimmend sind, die gesammelten Daten als gültig gelten, andernfalls sind die gesammelten Daten ungültig; wodurch eine 2-Voter-2-Fehlersicherheitssammlung erreicht wird.

2. Computerbasierte Stellwerkstruktur nach Anspruch 1, wobei die zwei CPUs jeweils die ausführbaren Dateien ausführen, die durch den Visual C++-Compiler und den Watcom C-Compiler durch Kompilieren derselben Programmcodes generiert werden.

3. Computerbasiertes Stellwerksystem nach einem der Ansprüche 1 bis 2, wobei: jedes von dem IO-System I und dem IO-System II ferner eine Ausgabeeinheit umfasst, die eine Doppelunterbrechungs-Steuerungsweise annimmt, wobei zwei Treiber, die einen dynamischen Treiber und einen statischen Treiber umfassen, in Reihe ausgegeben werden, wobei die statische Ausgabe und die dynamische Ausgabe jeweils von zwei unabhängigen CPU-Einheiten in einem Ausgabekäfig gesteuert werden, und wenn eine der beiden Ausgaben ungültig ist, eine Gesamtausgabe ungültig ist und eine 2-Voter-2 Fehlersicherheitsausgabe mit unterschiedlicher Hardware dadurch gebildet ist.

4. Computerbasiertes Stellwerksystem nach einem der Ansprüche 1 bis 3, wobei: eine Funktionsausführungseinheit des IO-Subsystems direkt ein mechanisches Stationsinnen-Schwerkraftrelais steuert und Außensignalvorrichtungen durch eine Kombination unterschiedlicher Relaisschaltungen steuert.

## Revendications

1. Système d'enclenchement informatisé, comprenant : un sous-système d'enclenchement, le sous-système d'enclenchement comprenant un système d'enclenchement I et un système d'enclenchement II qui sont identiques et sont interconnectés l'un à l'autre, dans lequel
chacun du système d'enclenchement I et du système d'enclenchement II comprend deux CPU comportant le même matériel et adoptant une synchronisation au niveau des tâches, et les deux CPU exécutent respectivement des fichiers exécutables générés par différents compilateurs en compilant les mêmes codes de programme ;
le système comprenant en outre : un sous-système d'ES, et un sous-système d'affichage et de maintenance de commande ;
le sous-système d'enclenchement reçoit des informations d'opération depuis une couche de dialogue homme-machine du sous-système d'affichage et de maintenance de commande, et reçoit des informations d'état du dispositif collectées par le sous-système d'ES, pour effectuer une opération logique de sécurité et pour effectuer une commande effective sur un dispositif utilisant le sous-système d'ES ;
dans lequel le sous-système d'ES comprend un système d'ES I et un système d'ES II qui sont identiques, et le système d'ES I et le système d'ES II sont respectivement connectés au système d'enclenchement I et au système d'enclenchement II ; et
chacun du système d'ES I et du système d'ES II comprend deux CPU comportant le même matériel ou un matériel hétérogène, les deux CPU exécutent respectivement deux ensembles de logiciels différents ;
dans lequel chacun du système d'ES I et du système d'ES II comprend une unité de collecte d'entrée, l'unité de collecte d'entrée collecte une tension CC statique par un procédé d'envoi de code dynamique où deux unités CPU indépendantes dans une cage de collecte d'entrée effectuent séparément la collecte, et ensuite envoient les résultats de collecte au sous-système d'enclenchement pour qu'ils soient comparés par le sous-système d'enclenchement ; si les résultats sont cohérents par comparaison, les données collectées sont considérées comme valides, sinon, les données collectées sont invalides ; obtenant ainsi une collecte à sécurité intégrée 2-vote-2.

2. Structure d'enclenchement informatisée selon la revendication 1, dans laquelle les deux CPU exécutent respectivement les fichiers exécutables générés par le compilateur Visual C++ et le compilateur Watcom C en compilant les mêmes codes de programme.

3. Système d'enclenchement informatisé selon l'une quelconque des revendications 1 à 2, dans lequel : chacun du système d'ES I et du système d'ES II comprend en outre une unité de sortie, qui adopte une manière de commande à double coupure, dans lequel deux pilotes, comprenant un pilote dynamique et un pilote statique, font des sorties en série, dans lequel la sortie statique et la sortie dynamique sont respectivement commandées par deux unités CPU indépendantes dans une cage de sortie, et lorsque l'une des deux sorties est invalide, une sortie totale est invalide et une sortie à sécurité intégrée 2-vote-2 avec un matériel différent est ainsi constituée.

4. Système d'enclenchement informatisé selon l'une quelconque des revendications 1 à 3, dans lequel : une unité d'exécution de fonction du sous-système d'ES commande directement un relais de gravité intérieur mécanique de gare, et commande des dispositifs de signalisation extérieurs par une combinaison de différents circuits de relais.
